Europäisches Patentamt

(19) European Patent Office

Office européen des brevets

(11) Publication number: **0 012 541**
**B1**

(12) **EUROPEAN PATENT SPECIFICATION**

(45) Date of publication of patent specification: **13.06.84**

(21) Application number: **79302704.6**

(22) Date of filing: **27.11.79**

(51) Int. Cl.³: **C 09 D 3/24, C 09 D 5/02, C 09 K 3/10, C 08 L 95/00**

(54) Preparation of bituminous coating compositions and assembly of constituents required for the preparation.

(30) Priority: **28.11.78 GB 4640078**

(43) Date of publication of application:
**25.06.80 Bulletin 80/13**

(45) Publication of the grant of the patent:
**13.06.84 Bulletin 84/24**

(84) Designated Contracting States:
**CH DE FR GB NL**

(56) References cited:
**DD - A - 109 656**
**DE - A - 2 363 085**
**DE - B - 1 771 509**
**DE - B - 2 119 115**
**GB - A - 1 244 535**

(73) Proprietor: **Exxon Research and Engineering Company**
**P.O.Box 390 180 Park Avenue**
**Florham Park New Jersey 07932 (US)**

(72) Inventor: **Glet, Walther**
**Fasenering 15**
**D-2105 Seevetal 9 (DE)**

(74) Representative: **Pitkin, Robert Wilfred et al,**
**ESSO Engineering (Europe) Ltd. Patents & Licences Apex Tower High Street**
**New Malden Surrey KT3 4DJ (GB)**

# 0 012 541

**Description**

This invention relates to bituminous coating and sealing compositions and to their preparation and use. The compositions are based on bituminous emulsions, more especially those suitable for water-proofing, sealing, insulation, and similar purposes in, for example, building and construction industries and in mining.

As employed herein the term bituminous emulsion includes an emulsion of any one or more of: naturally occurring asphalt, petroleum derived asphalt, and bitumen derived from coal, for example pitches and tars. The term is also used to include the simple type of emulsions of bitumen and water and the type additionally containing a natural or synthetic rubber. This latter type is of especial interest in the building and the like industries. The emulsions are anionic emulsions, almost invariably of the oil-in-water type.

One method of using such an emulsion is for it to be applied to the surface to be treated and the coating thus formed is left to dry by evaporation of the water component of the emulsion. This method of application suffers from a number of difficulties and disadvantages. Two major ones are (a) the time taken for the coating to dry; during the drying period the coating is very vulnerable to damage, particularly by water, for example rain-fall; and (b) after formation of a continuous film the emulsifiers present in the emulsion tend to be concentrated in the outer surface. Persistent contact with water, for example during rainfall, tends to lead to a degree of re-emulsification with consequent loss of sealing quality or the water repellent quality of the coating.

One type of solution to the problem which has been attempted is to spray a bitumen emulsion, or a bitumen-latex emulsion, onto a surface whilst at the same time separately spraying an emulsion-breaking/latex-breaking chemical onto the surface in such a way that the two sprays impinge at the moment the emulsion contacts the surface and the emulsion breaks immediately (as disclosed in British Patents 941,656 and 1,244,535). In another proposal of this type, the spray of the chemical intersects the other spray before the surface is reached so that the emulsion and latex are broken before contact with the surface (as disclosed in British Patent 1,383,463). In yet another proposal the emulsion is first coated on the surface and immediately after, while it is still wet, a coating of an aqueous solution of a salt such as calcium chloride is sprayed onto the surface as a protective layer (as disclosed in British Patents Nos 353,702 and 1,443,173).

The above type of proposal essentially requires the use of very accurate spraying. However, when a wind is blowing then, often, atomized material cannot be directed accurately and consistently. Material is wasted and environmental pollution cannot be avoided.

A second type of attempted solution to the problem is concerned with reducing drying time by adding to the emulsion, before use, an accelerator of such composition and quantity that it binds all the water of the emulsion after the latter has broken (as disclosed in East German Patent 66,128). Although this is a useful approach to overcoming the problem nevertheless, in practice, it does give rise to considerable difficulties. Thus, it is found that pot-life of the resultant mix is too variable and uncontrollable; often being so short as to give rise to gelling in the container. Additionally, often a nonuniform coating is observed due to lumpiness caused by the uncontrollable action of the accelerator. This is particularly to be observed if cement is used as accelerator. When cement, either dry or as an aqueous slurry is added to an anionic emulsion of bitumen, or bitumen/rubber, the calcium ions rapidly react with the anionic emulsifiers, and this leads to a very rapid and uneven breaking of the emulsion. The initial concentration of calcium ions is so high that immediate emulsion-breaking in the vicinity of a cement particle occurs, which leads to formation of lumps. The rapid supply of calcium ions also leads to an unacceptably short pot-life. A proposal for extending pot-life is disclosed in German Auslegeschrift 2,447,791, wherein a cement/oil dispersion is employed in a manner which is required to break the emulsion and bind all the water present. The pot-life can be extended to some extent in this way, but the problem of lump formation will still arise due to uneven take-up of water by the substantial quantity of cement employed.

A proposal for controlling the coagulation of a bitumen latex emulsion is disclosed in German patent 2,119,115. The coagulating agent described is a mixture of sodium hexafluorosilicate (otherwise known as sodium silicofluoride) and bentonite. The emulsion is broken by (i) formation of hydrofluoric acid which lowers pH substantially and (ii) absorption of water by the bentonite swelling clay. There is no attack on the emulsifier(s) of the emulsion. The presence of bentonite can give rise to problems similar to those referred to above in connection with cement. Another proposal for the use of sodium silicofluoride is disclosed in German Auslegeschrift 2,363,085. Again, the emulsion is broken by lowering pH, there is no attack on the emulsifier. There can be sudden breaking as pH is lowered and thus although some retardation can be effected there is no subsequent control. The use of sodium silicofluoride gives rise to water-soluble salts in the product, and these can prevent the product being employed for waterproofing and sealing purposes. German Auslegeschrift 2,363,085 also discloses the use of sulphates, chlorides and nitrates of calcium, magnesium and aluminium in a manner which brings about immediate, non-controllable emulsion-breaking.

It is an object of the present invention to provide a method of preparing a bituminous composition suitable for sealing, coating, etc., which composition has a controlled and acceptably long pot-life, is

2

substantially or completely free from lumps, and from which a seal or coating of good resistance against re-emulsification can be obtained.

According to the present invention there is provided a method of preparing a bituminous composition suitable for coating on to a substrate as a sealant, or insulating or water-proofing agent, comprising the steps of intimately mixing together an aqueous anionic emulsion of bitumen, or of bitumen and a rubber, and an amount of an emulsion-breaking accelerator; characterised in that the emulsion-breaking accelerator is employed in an amount up to 5 wt%, preferably 1 to 2 wt%, (calculated as active constituents) of the emulsion, and the accelerator comprises (i) at least one compound of iron or a metal of Groups 2 or 3 of the Periodic Table of Elements (Condensed Chemical Dictionary, 7th Edition 1966, Reinhold Publishing Corp.) having no substantial affect on the pH of the emulsion and releasing a cation reacting with the anionic emulsifier(s) of the emulsion to form a water-insoluble compound and (ii) a component which initially retards and thereafter controls the release of said cation and comprises a salt, preferably sodium aluminate, and/or a substantially water-insoluble hydrocarbon fraction.

The applicants have found that, surprisingly and contrary to the tenor of the prior proposals, it is not essential to bind all the water of the emulsion when breaking the emulsion. Applicants have found unexpectedly good results are obtained, when, in accordance with their invention, the emulsion-breaking accelerator is such as will neither bind any substantial quantity of the water, nor materially alter the pH value of the emulsion (which is normally a value in the range 7 to 12, suitably about 10).

An aluminium compound will normally only be used if the pH of the medium to which it is added is about 7 or 8. Most preferably a calcium compound is used.

In accordance with one preferred embodiment of the invention the accelerator comprises a solution, dispersion, suspension or slurry in a substantially water-insoluble hydrocarbon fraction of a calcium compound which has a water-solubility at 20°C in the range 0.02 to 0.60, expressed as concentration $Ca^{++}$ in grams per ml water (C. H. Hodgeman—"Handbook of Chemistry & Physics", 3rd Edition, 1955. Chemical Rubber Publishing Co., Cleveland, Ohio). Thus, for example, suitable calcium compounds include the fumarate, lactate, benzoate, salicylate, citrate, succinate, cinnamate, tungstate and sulphate. Calcium sulphate dihydrate is a preferred compound. Unsuitable compounds are calcium chloride and calcium selenate (solubility too high) and calcium oxalate and calcium fluoride (solubility too low).

The water-insoluble hydrocarbon fraction in which the calcium or other compound is dissolved, dispersed, slurried or suspended, must, of course, be substantially compatible with the bitumen/latex system and have a relatively high initial boiling point (preferably at least 150°C). Examples are mineral oils (paraffinic; naphthenic; aromatic; mixed); alkylated aromatic fractions; tar oils; fractions from steam-cracker tars; naphthenic fractions; and chlorinated aliphatic hydrocarbons. Generally an aromatic type oil is preferred.

A stabilizing agent will normally be included to prevent any substantial settling out of the compound which might otherwise occur. The stabilizing agent(s) employed will normally be thixotropic agents. Clay minerals are suitable, including organic derivatives thereof. Compounds sold under the trade mark Bentone, are preferred.

The following table shows normal, preferred and most preferred quantities (% by wt.) of the preferred components of an accelerator in accordance with this feature of the invention:—

|  | Normal | Preferred | Most preferred |
| --- | --- | --- | --- |
| Ca salt | 20—40 | 25—35 | 30—33 |
| Stabilizer | 5—10 | 7—9 | 7—8 |
| Hydrocarbon fraction | 75—50 | 68—56 | 63—59 |

Normally, slurry of a paste-like consistency will be employed; and normally will be employed in an amount up to 5 wt.% (as active ingredients), very preferably 1 to 2 wt.%, by wt. of the bituminous emulsion.

In accordance with another embodiment of the invention the accelerator comprises a mixture, slurry, dispersion or suspension of a compound of Group 2 or Group 3 metal or of a heavy metal, and a masking agent which regulates the rate of and/or quantity of cations delivered for reaction with the emulsifiers of the anionic emulsion.

Again, calcium compounds are preferred and finely divided hydraulic cement may conveniently be employed; being preferably sodium aluminate, but can be any other suitable compound reacting with calcium ions. Other examples are phosphates and oxalates. Suitably, as active ingredients, from 90 to 98 wt.% of cement and 10 to 2 wt.% of masking agent will be employed, preferably 94 to 96 wt.% cement and 6 to 4% accelerator, most preferably 95 and 5 wt.% respectively.

In all embodiments of the invention the accelerator can contain, if desired, non-active ingredients, for example a pigment. A pigment is useful in indicating the degree of homogeneity achieved during mixing the accelerator with the emulsion.

Preferably, the accelerator and masking agent are employed as a slurry, dispersion or suspension in water or one or more of the aforesaid hydrocarbon fractions. Preferably, too, the ratio total solids to total liquids is approximately 1:1.

Normally, in practice of the invention, up to 5 wt.%, more often up to 3 wt.%; preferably 0.4 to 2 wt.%, especially 1 to 2 wt.%, of active ingredients (accelerator plus masking agent) is employed, based on wt. of bituminous emulsion.

In all cases the bitumen emulsion employed is anionic and is most preferably a bitumen/rubber emulsion, very suitably one which is paste-like, and solvent- and plasticizer-free. These are known products, the bitumen being of suitable penetration for the purposes of emulsification and subsequent coating. The rubber is preferably employed in latex form. The rubber can be natural or synthetic, such as butyl rubber, butadiene-styrene copolymers, polychloroprenes, polychlorobutadienes, and polyisoprenes. Normally, the total solids content of the emulsions will lie between 50 and 70 wt.%, more especially from 55 to 65 wt.%. The method of making such emulsions is known.

It has been discovered in connection with the use of a masked accelerator that the hardness of the water used for the manufacture of the bituminous emulsion may influence the release of cations from the accelerator. Water is often softened, for example by means of known chemical agents such as phosphate or polyphosphate (trisodium phosphate being commonly used). Accordingly, water hardness, or quantity of softener present, should be taken into account to enable best results to be achieved. This is illustrated hereinafter.

In practice it will often be found convenient to provide a combination of individual but associated, units, one unit comprising a quantity of the said aqueous anionic emulsion of bitumen or of bitumen and rubber, and at least one other unit containing the corresponding quantity of the said emulsion-breaking accelerator as individual solids, or as a mixture of solids, or as a solution, slurry, dispersion of suspension of said solids in water or the said hydrocarbon fraction.

In a modification, said second unit contains only the required quantity of solid constituent(s) for forming the said slurry, etc. of the emulsion-breaking accelerator. In a further modification, where there are two or more such solid constituents then these may be contained in two or more separate units.

In all cases the emulsion-breaking accelerator quantities are preferably such that on adding and intimately mixing with the emulsion a pot-life (time available for using the resultant composition) is approximately 30 to 40 minutes.

Hence, all that need be done at the work site is for the accelerator components to be mixed, or slurried, etc., or for pre-mixed slurry to be taken, and then added to the bituminous emulsion and thoroughly stirred. No calculation of amounts is required because the quantity of solids or slurry provided is the calculated quantity for the associated emulsion. Thus, unskilled labour can undertake the mixing and obtain a composition having a consistently standard pot-life of say, thirty to thirty-five or forty minutes. The composition is easily brushable and can be readily coated onto most substrates, which may be at any angle to the horizontal. The coating is of consistent thickness and has very good resistance to re-emulsification and thus retains its water-proofing properties.

The essence of the invention lies in the controlled attack of the accelerator on the emulsifier(s) of the anionic bituminous emulsion, in a manner which forms water-insoluble metal soaps; without materially altering the pH value of the emulsion, or without binding any substantial quantity of the emulsion water. In effect, in the present invention the accelerator is one which acts in two stages. For example, assuming a calcium compound (as hereinbefore defined) is selected as a component of the accelerator. In the first stage $Ca^{++}$ ions are prevented from release from the accelerator by other components of the accelerator, for example the masking agent and/or the water-insoluble hydrocarbon fraction. This permits the accelerator to be intimately mixed with the emulsion before breaking commences. In the second stage $Ca^{++}$ ions are released in regulated manner to bring about controlled breaking of the emulsion and formation of water-insoluble soap(s) of the emulsifier(s) of the emulsion. The calcium salt of the accelerator is of lower solubility product than the calcium soap(s) formed. Stage 1 can extend over about 10 mins and stage 2 from 20 to 30 further minutes. By means of the accelerator, and quantity thereof employed, no water-binding occurs, no pH change of the system occurs, and the composition is readily spreadable or brushable, having no lumpiness caused by nonhomogeneous action and effects of the accelerator. There is, furthermore, no emulsion-inversion brought about and therefore, no trapping of water, such as would give rise to unwanted bubble effects to a surface coated with such a composition.

The following examples illustrate the invention further:—

Example 1

Four samples of a bitumen/latex emulsion of approximately 65 wt.% total solids content were taken and each was treated with a different one of four accelerator compositions, only the first being in accordance with invention. The compositions involved and results observed are shown in Table 1.

It will be seen that only the first composition gave a combination of (a) acceptable pot-life (which in practice is not less than 20 mins or above 60 mins; desirably 20 to 40 mins. and preferably approximately 30 mins.) and (b) low tendency of the composition to re-emulsify.

Example 2

Four further samples of the same bitumen/latex emulsion were taken and each treated with a different one of four accelerator compositions having the same calcium salt but having differing proportions of it, the organic liquid and the stabilizing agent. The compositions involved and results observed are shown in Table 2.

It will be seen that at least 20 wt.% of calcium salt in the accelerator (0.4 wt.% based on wt. of emulsion) is necessary for acceptable pot-life and acceptable resistance to re-emulsification; very preferably the amount used is of the order of 30 wt.%. (0.6 wt.% based on wt.% of emulsion).

Example 3

The same bitumen/latex emulsion was taken and the accelerator employed was the third one of those set out in Table 2. The pot-life of mixtures was measured at temperatures from 10°C to 60°C. The attached graph shows the results obtained.

It will be seen that over the temperature range 10°C to 25°C the pot-life is sufficient to enable easy application of the composition. The pot-life is predictable and repeatable over that range, emphasizing the usefulness of the invention in practice, particularly where un-skilled labour is involved.

Example 4

The same bitumen/latex emulsion was taken. The emulsion-breaking accelerator employed was in intimate mix of finely divided cement and finely divided sodium aluminate. Table 3 shows that on occasions with such an accelerator it may be desirable to add an amount of a softening agent to the water employed in forming the bituminous emulsion, in order to keep pot-life to the preferred thirty minutes and to minimise any tendency of a coating to re-emulsify (for example during rainfall).

TABLE 1

Pot life and re-emulsification tendency when employing various calcium accelerator systems when added to a latex/bitumen emulsion.

| Accelerator system (a paste) | 60 wt% tar oil 7 wt% BENTONE 33 wt % CaSo$_4$.2 H$_2$O | 60 wt% oil 7 wt% BENTONE 34 30 wt% CaCl$_2$ | 60 wt% tar oil 7 wt% BENTONE 34 33 wt% CaF$_2$ | 60 wt% tar oil 7 wt% BENTONE 34 33 wt% Ca(OH)$_2$ |
|---|---|---|---|---|
| Finished composition | < —————— | 100 g bitumen/latex emulsion (EUBIT-PLAST) plus 2 g paste | —————————> | |
| Pot-life | 30 minutes | 15 minutes | 24 hours | 24 hours |
| Tendency to re-emulsify | low | low | high | high |

TABLE 2

Pot life and re-emulsification tendency when employing a hydrated calcium sulfate accelerator system
added in varying concentrations to a bitumen/latex emulsion.

| Accelerator system (a paste) | 75 wt% tar oil 8 wt% BENTONE 34 17 wt% CaSO$_4$.2 H$_2$O | 69 wt% oil 8 wt% BENTONE 34 23 wt% CaSO$_4$×2 H$_2$O | 60 wt% tar oil 7 wt% BENTONE 34 33 wt% CaSO$_4$×2 H$_2$O |
|---|---|---|---|
| Finished composition | <———————— | 100 g bitumen/latex emulsion (EUBIT-PLAST) plus 2 g paste | ————————> |
| Pot-life | 150 minutes | 45 minutes | 30 minutes |
| Tendency to re-emulsify | Medium | low | low |

TABLE 3

Pot life vs. Degree of hardness of water in emulsion.

| Degree of hardness of water for latex/ bitumen emulsion | wt% TSP[+] added to water phase | Composition of accelerator added at a 1 wt% level | Pot-Life hours | Tendency to re-emulsify |
|---|---|---|---|---|
| DGH[++] | | | | |
| 7 | 0 | none | undefined | high |
| 7 | 0 | 100% cement | 0.25 | low (but non-homo-geneous, lumpy) |
| 3 | 0 | 95% cement 5% Na-aluminate | 0.5 | low |
| 7 | 0.1 | " | 0.5 | low |
| 15 | 0.2 | " | 0.5 | low |
| 30 | 0.3 | " | 0.5 | low |

[+] TSP=Trisodium phosphate

[++] DGH=Degree German Hardness. 1° German Hardness is the hardness equivalent to 1 mg CaO in 100 cc H$_2$O; (which is 10 ppm CaO).

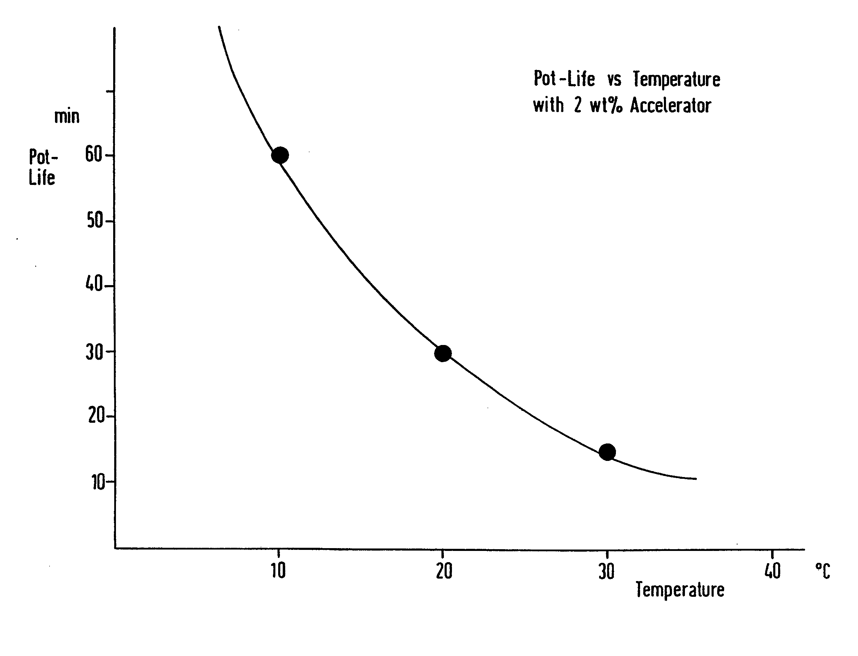

### Claims

1. A method of preparing a bituminous composition suitable for coating on to a substrate as a sealant, or insulating or water-proofing agent, comprising the steps of intimately mixing together an aqueous anionic emulsion of bitumen, or of bitumen and a rubber, and an amount of an emulsion-breaking accelerator; characterised in that the emulsion-breaking accelerator is employed in an amount up to 5 wt%, preferably 1 to 2 wt%, (calculated as active constituents) of the emulsion, and the accelerator comprises (i) at least one compound of iron or a metal of Groups 2 or 3 of the Periodic Table of Elements (Condensed Chemical Dictionary, 7th Edition 1966, Reinhold Publishing Corp.) having no substantial affect on the pH of the emulsion and releasing a cation reacting with the anionic emulsifier(s) of the emulsion to form a water-insoluble compound and (ii) a component which initially retards and thereafter controls the release of said cation and comprises a salt, preferably sodium aluminate, and/or a substantially water-insoluble hydrocarbon fraction.

2. A method as claimed in claim 1, characterised in that the accelerator comprises a solution, dispersion, suspension or slurry in a substantially water-insoluble hydrocarbon fraction, preferably a mineral oil or a steam-cracker tar, of a calcium compound which has a water-solubility at 20°C in the range 0.02 to 0.60, when expressed as Ca$^{++}$ gram per ml water.

3. A method as claimed in claim 2, characterised in that the compound is calcium sulphate dihydrate.

### Patentansprüche

1. Verfahren zur Herstellung einer bituminösen Zusammensetzung, die sich zur Aufbringung als Versiegelungsmittel, Isoliermittel oder Wasserfestmachmittel auf ein Substrat eignet, bei welchem eine wässrige anionische Emulsion von Bitumen oder von Bitumen und einem Kautschuk innig mit einem emulsionsbrechenden Beschleunigungsmittel vermischt wird, dadurch gekennzeichnet, daß das emulsionsbrechende Beschleunigungsmittel in einer Menge von bis zu 5 Gew.%, vorzugsweise 1 bis 2 Gew.% (berechnet als aktive Bestandteile) der Emulsion verwendet wird und das Beschleunigungs-

7

mittel (i) mindestens eine Verbindung von Eisen oder einem Metall der Gruppen 2 oder 3 des periodischen Systems der Elemente (Condensed Chemical Dictionary, 7th Edition, 1966, Reinhold Publishing Corp.), die keinen wesentlichen Effekt auf den pH-Wert der Emulsion hat und ein Kation freisetzt, das mit dem (den) anionischen Emulgiermittel(n) der Emulsion unter Bildung einer wasserunlöslichen Verbindung reagiert, und (ii) eine Komponente enthält, die anfänglich die Freisetzung des Kations verzögert und danach reguliert und ein Salz, vorzugsweise Natriumaluminat, und/oder eine im wesentlichen wasserunlösliche Kohlenwasserstofffraktion umfaßt.

2. Verfahren nach Anspruch 1, dadurch gekennzeichnet, daß das Beschleunigungsmittel eine Lösung, Dispersion, Suspension oder Aufschlämmung in einer im wesentlichen wasserunlöslichen Kohlenwasserstofffraktion, vorzugsweise einem Mineralöl oder einem Dampfcrackteer, einer Calciumverbindung, umfaßt, die eine Wasserlöslichkeit bei 20°C im Bereich von 0,02 vis 0,60, ausgedrückt als $Ca^{++}/g$ ml Wasser, besitzt.

3. Verfahren nach Anspruch 2, dadurch gekennzeichnet, daß die Verbindung Calciumsulfat-Dihydrat ist.

**Revendications**

1. Un procédé de préparation d'une composition bitumineuse convenant pour revêtir un substrat et servir d'agent d'étanchéité ou d'agent d'isolement ou d'imperméabilisation, comprenant les étapes consistant à mélanger intimement ensemble une émulsion anionique aqueuse de bitume, ou de bitume et d'un caoutchouc, et une certaine quantité d'un accélérateur de rupture d'émulsion, procédé caractérisé en ce qu'on utilise l'accélérateur de rupture d'émulsion en une quantité d'au maximum 5% en poids, de préférence de 1 à 2% en poids, (calculée en constituants actifs) de l'émulsion, et en ce que l'accélérateur comprend (i) au moins un composé de fer ou d'un métal des groupes II ou III du Tableau Périodique des Eléments (T.P.E.) (Condensed Chemical Dictionary, 7ème édition 1966, Reinhold Publishing Corp.) n'ayant pas d'effet important sur le pH de l'émulsion et libérant un cation qui réagit avec le ou les émulsifiant(s) anionique(s) de l'émulsion pour former un composé insoluble dans l'eau, et (ii) un constituant qui initialement retarde puis régule la libération dudit cation et comprend un sel, de préférence l'aluminate de sodium, et/ou une fraction d'hydrocarbures essentiellement insolubles dans l'eau.

2. Un procédé comme revendiqué dans la revendication 1, caractérisé en ce que l'accélérateur comprend une solution, dispersion, suspension ou bouillie, dans une fraction d'hydrocarbures essentiellement insolubles dans l'eau, de préférence une huile minérale ou un goudron de craqueur à la vapeur d'eau, d'un composé de calcium ayant dans l'eau à 20°C une solubilité comprise entre 0,02 et 0,60, quand elle est exprimée en gramme de $Ca^{++}$ par ml d'eau.

3. Un procédé comme revendiqué dans la revendication 2, caractérisé en ce que le composé est du sulfate de calcium dihydraté.

Pot-Life vs Temperature
with 2 wt% Accelerator

min

Pot-
Life

0 012 541

1

Temperature